# EUROPÄISCHE PATENTSCHRIFT

(11) **EP 0 896 290 B1**
(45) Veröffentlichungstag und Bekanntmachung des Hinweises auf die Patenterteilung: **20.10.2004**
(21) Anmeldenummer: 98114760.6
(22) Anmeldetag: 05.08.1998
(51) Int. Cl.: G06K 7/10

(54) **Verfahren und Vorrichtung zum Lesen eines aus einer vorgegebenen Anzahl von Codeelementen bestehenden Strichcodes**
Method and device for reading a barcode consisting of a predetermined number of coding elements
Procédé et dispositif pour la lecture de code à barres constitué par un nombre prédéterminé d'éléments de codage

(30) Priorität: 06.08.1997 DE 19734031
(43) Veröffentlichungstag der Anmeldung: 10.02.1999
(73) Patentinhaber: Sick AG, 79183 Waldkirch, Breisgau (DE)
(72) Erfinder: Reichenbach, Jürgen, 79312 Emmendingen (DE); Hippenmeyer, Heinrich, 79348 Freiamt (DE)
(74) Vertreter: Pellkofer, Dieter Dr.

(56) Entgegenhaltungen:
- EP-A- 0 129 084
- US-A- 3 958 104
- US-A- 5 296 691
- US-A- 5 404 004

## Beschreibung

Die vorliegende Erfindung betrifft ein Verfahren zum Lesen eines aus einer vorgegebenen Anzahl von Codeelementen bestehenden Strichcodes zur Erzeugung eines binären Signals mit aufeinanderfolgenden High-Low-Phasen, deren Längen den Breiten der aufeinanderfolgenden Codeelemente entsprechen, nach dem Oberbegriff des Anspruchs 1. Weiterhin ist die Erfindung auf eine Vorrichtung zur Durchführung eines solchen Verfahrens gerichtet.

Verfahren dieser Art werden zusammen mit Strichcodelesern verwendet, wobei der Strichcodeleser einen Abtaststrahl in Richtung des zu erfassenden Strichcodes aussendet. Der Abtaststrahl wird beispielsweise über ein rotierendes Polygonspiegelrad umgelenkt, so daß der Abtaststrahl periodisch um einen Abtastwinkel verschwenkt wird. Durch den sich bewegenden Abtaststrahl wird dabei auf das den Strichcode tragende Objekt bzw. auf den Strichcode eine Abtastlinie projiziert.

Die meisten bekannten Verfahren erfordern, daß zur erfolgreichen Decodierung eines Strichcodes dieser über seine gesamte Länge von dem Abtaststrahl überstrichen wird. Diese Bedingung wird jedoch dann nicht mehr erfüllt, wenn der zu erfassende Strichcode gegenüber der Abtastrichtung so verkippt ist, daß die auf den Strichcode projizierte Abtastlinie den Strichcode nicht mehr über dessen gesamte Länge überdeckt. Dies kann beispielsweise dann der Fall sein, wenn sich der Strichcode auf einem Gepäckstück befindet, das auf einem Förderband transportiert wird. Der Strichcode kann dabei jede beliebige Lage einnehmen, so daß nicht gewährleistet ist, daß ein das Objekt überstreichender Abtaststrahl den Strichcode über seine gesamte Länge überstreicht.

Zur Erhöhung der Decodierwahrscheinlichkeit wurde daher in der DE-A-107 118 73 vorgeschlagen, einen sich schräg zur Abtastrichtung bewegenden Strichcode mehrfach durch denselben Abtaststrahl abzutasten, so daß aufgrund der Relativbewegung zwischen Strichcode und Abtastlinie unterschiedliche nebeneinanderliegende Bereiche des Strichcodes von dem Abtaststrahl schräg überstrichen werden.

Die dabei jeweils erfaßten Codesegmente des Strichcodes werden in einem Bildspeicher zu einem vollständigen Strichcode zusammengefaßt, wobei die Zuordnung der jeweils dasselbe Codeelement des Strichcodes bildenden, durch die schräge Abtastung erfaßten Codeelementabschnitte durch Ermittlung des Kippwinkels zwischen der Abtastrichtung und der Längsrichtung des Strichcodes, des sogenannten Tiltwinkels, erfolgt. Nachdem der Strichcode im Bildspeicher vollständig aufgebaut ist, wird er mit konventionellen Methoden decodiert.

All diesen Verfahren ist gemeinsam, daß für eine erfolgreiche Erfassung und Decodierung des Strichcodes dieser von einem Abtaststrahl eines einzelnen Strichcodelesers entweder in einem Durchgang oder, bei schräger Abtastung, in mehreren unmittelbar aufeinanderfolgenden Durchgängen entlang paralleler Abtastlinien überstrichen wird.

Problematisch ist dabei, daß Strichcodes, die aus der Richtung des Strichcodelesers teilweise nicht lesbar sind, beispielsweise aufgrund einer teilweisen Abdeckung, eines gebogenen oder geknickten Strichcodes, eines ungünstigen Lesewinkels oder eines teilweise zerstörten Strichcodes, mit diesen Verfahren nicht vollständig erfaßbar und somit nicht decodierbar sind.

Aus der US-A-5,404,004 ist ein Verfahren bekannt, bei dem jeweils ein einzelner Strichcode durch eine Mehrfachabtastung mit unterschiedlichen Abtastlinien erfasst und ausgewertet wird. Durch die Mehrfachabtastung sollen Fehler, die bei einer Einfachabtastung erfolgen, kompensiert werden und insbesondere jeweils durch einen Abtaststrahl erfasste Codesegmente mit einem von einem anderen Abtaststrahl erfassten Codesegment kombiniert werden. Da die US-A-5,404,004 davon ausgeht, dass in jedem Fall der gleiche Strichcode überstrichen wird, finden sich in dieser Druckschrift keine Hinweise, wie erkannt werden soll, ob es sich bei den erfassten Codesegmenten um Codesegmente des gleichen oder von unterschiedlichen Strichcodes handelt.

Aus der US-A-5,296,691 ist ebenfalls ein Verfahren zur Erfassung von Strichcodes durch eine Abtastung mit mehreren Abtastlinien aus unterschiedlichen Richtungen beschrieben. Auch diese Entgegenhaltung geht davon aus, dass beim Abtasten erfasste Codesegmente Teile des selben Strichcodes darstellen, so dass diese Entgegenhaltung lediglich eine Offsetbestimmung zwischen den einzelnen, erfassten Codesegmenten durchführt, um die Codesegmente korrekt zusammenzusetzen.

Es ist daher eine Aufgabe der Erfindung, ein Verfahren der eingangs genannten Art so auszubilden, daß die Erfassungs- und Decodierwahrscheinlichkeit auch bei den genannten problematischen Fällen weiter erhöht wird. Weiterhin soll eine Vorrichtung zur Durchführung eines solchen Verfahrens angegeben werden.

Das die Verfahren betreffende Aufgabe wird ausgehend von einem Verfahren der eingangs genannten Art erfindungsgemäß durch die Merkmale des Anspruchs 1 gelöst.

Eine erfindungsgemäß ausgebildete Vorrichtung umfaßt die Merkmale des Anspruchs 12.

Durch die Erfindung wird somit die Problematik, daß der Strichcode nicht vollständig, sei es in einem oder in mehreren Abtastungen, durch einen Abtaststrahl überstrichen werden kann, dadurch gelöst, daß mehrere Abtaststrahlen aus unterschiedlichen Richtungen entlang unterschiedlicher Abtastlinien das den Strichcode tragende Objekt überstreichen. Kann der Strichcode aus einer Richtung von dem entsprechenden Abtaststrahl nicht vollständig, d. h. entlang seiner Längsachse oder in mehreren Teilen schräg zu seiner Längsachse, überstrichen werden, so besteht die Möglichkeit, daß der nicht überstrichene Teil des Strichcodes aus einer anderen Richtung durch einen der anderen Abtaststrahlen überstrichen werden kann.

Da es möglich ist, daß sich auf dem den Strichcode tragenden Objekt mehrere, unterschiedliche Strichcodes befinden, werden die erfaßten Codesegmente anhand vorgegebener Entscheidungskriterien daraufhin überprüft, ob sie Segmente des gleichen Strichcodes darstellen, so daß nur zusammengehörige Codesegmente zur Rekonstruktion des abgetasteten Strichcodes zusammengefaßt werden. Der somit vollständig erfaßte Strichcode kann anschließend durch übliche Verfahren decodiert werden.

Grundsätzlich ist es auch möglich, daß derselbe Strichcode auf dem Objekt beispielsweise aus Redundanzgründen mehrfach vorgesehen ist. In diesem Fall ist es mit dem erfindungsgemäßen Verfahren möglich, ein Codesegment oder mehrere Codesegmente eines abgetasteten Strichcodes mit einem oder mehreren Codesegmenten eines anderen, dieselbe Information tragenden, abgetasteten Strichcode zusammenfassen, um auf diese Weise den an unterschiedlichen Stellen des Objekts vorgesehenen Gesamtstrichcode zu rekonstruieren.

Nach einer vorteilhaften Ausführungsform der Erfindung werden die Abtaststrahlen von unterschiedlichen, insbesondere räumlich voneinander getrennten Strichcodelesern ausgesandt. Bei dieser Ausführungsform kann eine Vielzahl von Strichcodelesern so im Raum angeordnet sein, daß eine Erfassung des Strichcodes aus im wesentlichen allen relevanten Richtungen erfolgt. Auf diese Weise werden alle möglichen Orientierungen des Strichcodes abgedeckt, so daß jeder Bereich des Strichcodes durch zumindest einen der Abtaststrahlen der Strichcodeleser überstrichen werden kann.

Es ist jedoch auch möglich, daß die Abtaststrahlen von einem Strichcodeleser, insbesondere durch Teilen und/oder Umlenken eines Abtaststrahls, erzeugt und ausgesandt werden. Durch diese spezielle Ausgestaltung eines Strichcodelesers, bei dem ein Abtaststrahl beispielsweise über einen oder mehrere halbdurchlässige Spiegel in mehrere Abtaststrahlen geteilt wird, kann die Anzahl der benötigten Strichcodeleser verringert werden. Allerdings ist zum einen ein solcher Strichcodeleser aufwendiger in der Herstellung und zum anderen die Justierung eines solchen Strichcodelesers und eventuell benötigter Umlenkvorrichtungen in der Praxis schwierig.

In einer weiteren bevorzugten Ausführungsform ist die Auswerteeinheit als zentrale Auswerteeinheit ausgebildet. Dabei kann als Auswerteeinheit einer der Strichcodeleser oder eine von den Strichcodelesern getrennt ausgebildete Einheit verwendet werden.

Durch die zentrale Auswerteeinheit können die von den unterschiedlichen Strichcodelesern erfaßte Codesegmente daraufhin überprüft werden, ob sie gemäß den vorgegebenen Entscheidungskriterien Teile desselben Strichcodes sind. Eine aufwendige Kommunikation und Synchronisation zwischen unterschiedlichen Auswerteeinheiten entfällt somit.

Nach einer weiteren vorteilhaften Ausführungsform der Erfindung werden die erfaßten Codesegmente in allen möglichen Kombinationen zusammengefaßt und jeweils auf Erfüllung der vorgegebenen Entscheidungskriterien hin überprüft. Grundsätzlich ist es jedoch auch möglich, daß aufgrund bestimmter Entscheidungskriterien, die für die einzelnen Codesegmente überprüft werden, bestimmte Kombinationen von vornherein ausgeschlossen werden können. Ebenso kann aufgrund bestimmter Entscheidungskriterien die Anordnung erfaßter Codesegmente vorgegeben sein.

Nach einer weiteren bevorzugten Ausführungsform der Erfindung werden jeweils die Codesegmente zusammengefaßt, deren räumliche Positionen innerhalb vorgegebener Grenzwerte übereinstimmen.

Auf diese Weise ist gewährleistet, daß großer Wahrscheinlichkeit nur die von den unterschiedlichen Abtaststrahlen überstrichen und von den Strichcodelesern erfaßten Codesegmente zusammengefaßt werden, die Teile desselben Strichcodes darstellen.

Für den Fall, daß zwischen dem Strichcode und dem Strichcodeleser bzw. den Strichcodelesern eine Relativbewegung stattfindet, beispielsweise der Strichcode bevorzugt auf einer Fördereinrichtung bewegt wird, wird nach einer weiteren vorteilhaften Ausführungsform bei der Bestimmung bzw. der Auswertung der räumlichen Positionen diese Relativbewegung berücksichtigt. Wird der Strichcode von unterschiedlichen Abtaststrahlen zu unterschiedlichen Zeitpunkten überstrichen, so hat er seine Position im Raum bezüglich des Strichcodelesers bzw. der Strichcodeleser aufgrund der Relativbewegung zwischenzeitlich verändert. Erfindungsgemäß wird diese Veränderung der Raumposition kompensiert, so daß die unterschiedlichen abgetasteten Codesegmente wieder als Teile desselben Strichcodes erkannt werden können.

Bevorzugt wird dabei für jedes erfaßte Codesegment jeweils zum Zeitpunkt seiner Abtastung ein für den ab einem, insbesondere für alle Codesegmente gleichen Referenzzeitpunkt zurückgelegten Weg des jeweiligen Codesegments repräsentativer Abstandswert ermittelt, der jeweils bei der Bestimmung bzw. der Auswertung der räumlichen Position der Codesegmente berücksichtigt, insbesondere jeweils von der zur Bewegungsrichtung parallelen Komponente der ermittelten räumlichen Position abgezogen wird. Durch die Bestimmung dieses Abstandswertes wird der aufgrund der Relativbewegung zwischen unterschiedlichen Abtastungen zurückgelegte Weg des Strichcodes kompensiert, so daß die jeweils kompensierten Positionen der Codesegmente unmittelbar miteinander verglichen werden können.

Vorteilhaft wird dabei zum Referenzzeitpunkt ein Inkremental-Taktsignal gestartet und als Abstandswert der Inkremental-Zählerstand zum Zeitpunkt der Abtastung verwendet. Auf diese Weise kann der Abstandswert durch sehr einfache, technische Mittel bestimmt werden. Die Frequenz des Inkremental-Taktsignals korrespondiert dabei mit der Bewegungsgeschwindigkeit des Strichcodes, wobei das Signal bevorzugt binär codiert ist, so daß eine einfache Auswertung möglich ist. Grundsätzlich kann das Inkremental-Taktsignal bereits vor dem Referenzzeitpunkt gestartet werden, so daß in diesem Fall lediglich ein Offset berücksichtigt werden muß.

Ist die Relativgeschwindigkeit zwischen dem Strichcode und dem Strichcodeleser bzw. den Strichcodelesern konstant, so kann anstelle der Bestimmung des Inkremental-Zählerstandes auch einfach die zwischen den einzelnen Abtastungen verstrichene Zeit bestimmt werden. Aus der gemessenen Zeit kann aufgrund der konstanten Relativgeschwindigkeit dann der während dieser Zeit zurückgelegte Weg des Strichcodes bestimmt werden.

Zur vereinfachten Bestimmung der räumlichen Position des jeweiligen Codesegments werden vorteilhaft drei kartesischen Positionskoordinaten ermittelt, wobei eine der Koordinaten als Hauptkoordinate die Position entlang der Relativbewegung angibt. Die Hauptkoordinate stellt dann denjenigen Wert der räumlichen Position dar, der bezüglich einer Relativbewegung zwischen Strichcode und Strichcodeleser erfindungsgemäß kompensiert wird.

Nach einer weiteren vorteilhaften Ausführungsform der Erfindung werden aus den erfaßten Codesegmenten jeweils die Codeart bestimmt und diejenigen Codesegmente mit übereinstimmender Codeart zusammengefaßt. Ist aus den erfaßten Codesegmenten die Bestimmung der Codeart, beispielsweise 2/5 Interleaved, Code 128 usw., möglich, so können Codesegmente, die nicht derselben Codeart angehören von vornherein als nicht zusammengehörig eingestuft werden.

Nach einer weiteren bevorzugten Ausführungsform werden diejenige Codesegmente zusammengefaßt, deren Zusammenfassung einen Strichcode mit zulässiger Lauflänge bzw. Codeelementanzahl, insbesondere mit der Lauflänge bzw. der Codeelementanzahl des abgetasteten Strichcodes ergibt. Codesegmente, deren Zusammenfassung zu einem Strichcode führen würde, dessen Lauflänge bzw. Codeelementanzahl kleiner oder größer der erwarteten Lauflänge bzw. Codeelementanzahl ist, können somit nicht Teile desselben zu erkennenden Strichcodes sein.

Nach einer weiteren vorteilhaften Ausführungsform der Erfindung werden jeweils Codesegmente zusammengefaßt, bei denen die erfaßten Codeelemente zumindest im Endbereich des einen Codesegments mit den erfaßten Codeelementen zumindest im Anfangsbereich des anderen Codesegments übereinstimmen, wobei die Codesegmente so überlappend zusammengefaßt werden, daß die übereinstimmenden Codeelemente aufeinanderliegen. Hierbei ergibt sich eine um so größere Wahrscheinlichkeit einer korrekten Rekonstruktion des zu erfassenden Strichcodes, je mehr Codeelemente der Codesegmente übereinstimmen.

Nach einer weiteren bevorzugten Ausführungsform der Erfindung wird jedes Codesegment durch eine Mehrfachlesung ermittelt, wobei diejenigen Codesegmente zusammengefaßt werden, deren Zusammenfassung einen Strichcode ergibt, bei dem der Wert der Mehrfachlesung für alle Codeelemente einen vorgegebenen Mindestwert überschreitet. Dadurch wird der Tatsache Rechnung getragen, daß die Erkennungswahrscheinlichkeit für Teile des Strichcodes, die benachbart zu einem nicht überstreichbaren Teil angeordnet sind, sinkt, so daß für die in diesem Bereich angeordneten Elemente der Wert der Mehrfachlesung eventuell unter dem vorgegebenen Mindestwert liegt. Bei der Zusammenfassung der entsprechenden Codesegmente ergibt sich für die im Überlappungsbereich der Codesegmente zusammenfallenden Codeelemente eine Addition der ermittelten Werte der Mehrfachlesung, so daß die Wahrscheinlichkeit eine erfolgreiche Rekonstruktion des Strichcodes erhöht wird.

Nach einer weiteren bevorzugten Ausführungsform der Erfindung wird für jedes Codesegment sein Segmenttyp bestimmt, insbesondere ob es sich um ein Start-, ein Mitten- oder ein Stopsegment handelt, wobei jeweils die erfaßten Codesegmente, deren Segmenttypen zueinander korrespondieren, zusammengefaßt werden. Wird beispielsweise eine Start- und ein damit korrespondierendes Stopsegment erfaßt, so ist allein durch den jeweiligen Segmenttyp bereits die Anordnung, d. h. die Reihenfolge der Codesegmente vorgegeben. Andererseits kann bei Erfassung zweier unterschiedlicher Codesegmente vom gleichen Segmenttyp, beispielsweise bei der Erfassung von zwei Start- oder zwei Stopsegmenten, oder bei der Erfassung von nicht miteinander korrespondierenden Start- und Stopsegmenten eine Zusammenfassung von vornherein ausgeschlossen werden.

Nach einer weiteren bevorzugten Ausführungsform der Erfindung werden diejenigen Codesegmente zusammengefaßt, deren Zusammenfassung einen Strichcode mit positiver Prüfzifferbewertung ergibt. Fällt die Prüfzifferbewertung des erzeugten Strichcodes negativ aus, so handelt es sich nicht um einen gültigen Strichcode, so daß die Zusammenfassung der entsprechenden Codesegmente verworfen wird.

Erfindungsgemäß kann jedes der angegebenen Entscheidungskriterien in Alleinstellung oder in Kombination mit einem oder mehreren der übrigen Entscheidungskriterien dazu verwendet werden, um zwei oder mehrere erfaßte Codesegmente miteinander zu kombinieren und damit eine erfolgreiche Rekonstruktion des abgetasteten Strichcodes zu erhalten.

Weitere vorteilhafte Ausführungsformen der Erfindung sind in den Unteransprüchen angegeben.

Nachfolgend wird die Erfindung anhand eines Ausführungsbeispiels unter Bezugnahme auf die Zeichnungen näher beschrieben; in diesen zeigen:
- Fig. 1: eine vereinfachte, perspektivische Darstellung eines einen abzutastenden Strichcode tragenden Objekts an zwei unterschiedlichen Positionen im Raum und
- Fig. 2: ein kartesisches Koordinatensystem, in dem die zwei räumlichen Positionen, zu denen jeweils Segmente des Strichcodes nach Fig. 1 erfaßt werden, dargestellt sind.

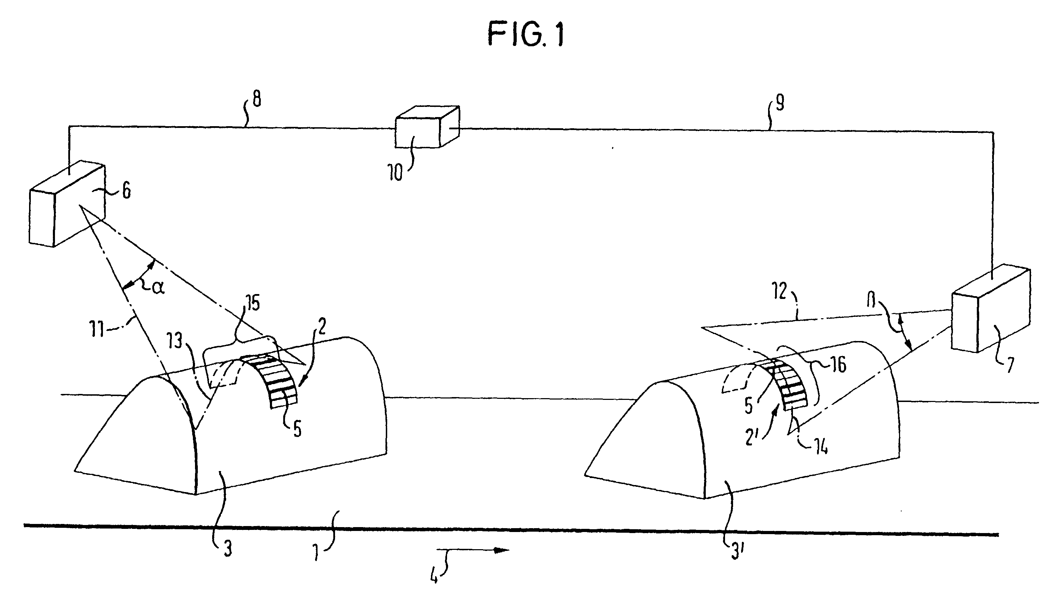

Fig. 1 zeigt ein Förderband 1, auf dem ein einen Strichcode 2 tragendes Objekt 3 in einer ersten Position angeordnet ist. Das Förderband 1 bewegt sich in Richtung eines Pfeils 4, so daß das Objekt 3 von seiner in Fig. 1 links dargestellten ersten Position in eine in Fig. 1 rechts dargestellte zweite Position transportiert wird. Zum besseren Verständnis werden im folgenden das Objekt 3 sowie der Strichcode 2 jeweils mit 3' bzw. 2' bezeichnet, wenn auf das Objekt in seiner zweiten Position Bezug genommen wird.

Der Strichcode 2 umfaßt eine Vielzahl von aus Balken und Lücken bestehenden Codeelementen 5 und ist an einer gekrümmten Oberseite des Objekts 3 angeordnet, so daß er sich von einer rückwärtig gelegenen Seite des Objekts 3 über die Krümmung hinweg auf die in Fig. 1 vorne gelegene Seite erstreckt.

Oberhalb des Förderbandes 1 sind zwei Strichcodeleser 6, 7 vorgesehen, wobei der Strichcodeleser 6 in der Zeichnungsebene nach hinten und der Strichcodeleser 7 nach vorne versetzt angeordnet ist. Beide Strichcodeleser 6, 7 sind über elektrische Leitungen 8, 9 mit einer zentralen Auswerteeinheit 10 verbunden und überstreichen mit Abtaststrahlen 11, 12 das Förderband 1 in unterschiedlichen Richtungen.

Die Abtaststrahlen 11, 12 werden jeweils innerhalb der Strichcodeleser 6, 7 beispielsweise über ein Polygonspiegelrad um Schwenkwinkel α bzw. β verschwenkt, so daß jeder Abtaststrahl auf dem Förderband 1 bzw. auf einem sich auf dem Förderband befindenden Objekt eine Abtastlinie erzeugt, wie es im weiteren näher beschrieben wird.

Zu einem Zeitpunkt t₁ wird der auf dem Objekt 3 angeordnete Strichcode 2 von dem Abtaststrahl 11 erfaßt und entlang einer Abtastlinie 13 teilweise überstrichen. Die Abtastlinie 13 überdeckt den Strichcode 2 von seinem rückwärtig gelegenen Ende bis in seinen vorderen Bereich hinein. Ein vollständiges Überstreichen des Strichcodes 2 durch den Abtaststrahl 11, so daß der Strichcode 2 vollständig von der Abtastlinie 13 überdeckt wird, ist bei der dargestellten Konstellation nicht möglich, da aufgrund der gekrümmten Anordnung des Strichcodes 2 dessen vorderer Bereich von dem im rückwärtigen Bereich des Förderbandes 1 angeordneten Strichcodelesers 6 nicht einsehbar ist.

Zu einem Zeitpunkt t₂ hat sich das Objekt 3 aufgrund der Bewegung des Förderbandes 1 entlang des Pfeils 4 in die zweite Position (Objekt 3') bewegt, in der der Strichcode 2' durch den Abtaststrahl 12 des Strichcodelesers 7 entlang einer Abtastlinie 14 überstrichen wird. Aufgrund der Anordnung des Strichcodelesers 7 im in Fig. 1 vorne gelegenen Bereich des Förderbandes 1 überstreicht der Abtaststrahl 12 entlang der Abtastlinie 14 den zur Vorderseite des Förderbands 1 zeigenden Abschnitt des Strichcodes 2', während der rückwärtig gelegene Teil aufgrund der gekrümmten Anordnung des Strichcodes 2' von dem Abtaststrahl 12 nicht erreicht wird.

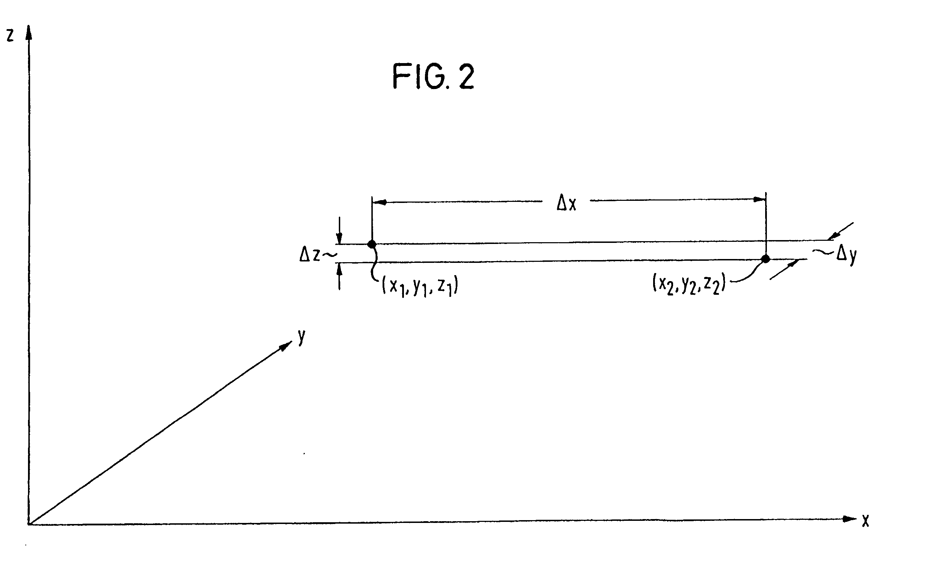

In Fig. 2 sind stark vereinfacht die räumlichen Positionen der Strichcodes 2, 2' zu den Zeitpunkten t₁ und t₂ dargestellt. Die Position des Strichcodes 2 ist dabei durch das Koordinatentripel (x₁, y₁, z₁) und die Position des Strichcodes 2' durch das Koordinatentripel (x₂, y₂, z₂) in einem kartesischen Koordiatensystem dargestellt. Dabei ist das kartesische Koordinatensystem so ausgerichtet, daß die x-Achse entlang der durch den Pfeil 4 in Fig. 1 dargestellten Bewegungsrichtung des Förderbandes 1 und damit des Strichcodes 2, 2' entspricht.

Aus Fig. 2 ist ersichtlich, daß sich die räumliche Lage des Strichcodes 2 in y- und z-Richtung bei der Bewegung aus der ersten Position in die zweite Position nur jeweils geringfügig um die Werte Δy und Δz ändert. Ursache für dieser Änderungen können beispielsweise Ungleichmäßigkeiten in der Höhe des Förderbandes 1 sein. Desweiteren kann bei der Bestimmung der räumlichen Lage des Strichcodes 2 bzw. 2' aufgrund dessen endlicher Abmessungen Unterschiede in der y- und z-Richtung bei der Lageerfassung entstehen. Wird beispielsweise als z-Wert die Position des ersten von den Abtaststrahlen 11, 13 überstrichenen Codeelements 5 verwendet, so ergeben sich unterschiedliche z-Werte, je nachdem, ob der Strichcode 2 bzw. 2' von oben nach unten oder von unten nach oben überstrichen wird. Da die Strichcodes 2, 2' üblicherweise nur relativ geringe Abmessungen, die im Bereich weniger Zentimeter liegen besitzen, sind die möglichen Abweichungen in z- und y-Richtung jedoch relativ gering.

Demgegenüber sind die Positionen in x-Richtung des Strichcodes 2 zum Zeitpunkt t₁ und des Strichcodes 2' zum Zeitpunkt t₂ aufgrund der Bewegung des Förderbands 1 und damit des Strichcodes 2 bzw. 2' deutlich voneinander verschieden. Dabei hängt der Wert der Verschiebung Δx von der Geschwindigkeit des Förderbands 1 und dem seitlichen Abstand Δt = t₂ - t₁ zwischen den beiden Abtastzeitpunkten ab.

Um die zu den beiden verschiedenen Zeitpunkten t₁ und t₂ an unterschiedlichen Orten (x₁, y₁, z₁) und (x₂, y₂, z₂) erfaßten Bereiche des Strichcodes 2 bzw. 2' eindeutig demselben Strichcode zuordnen zu können, werden erfindungsgemäß folgende Verfahrensschritte durchgeführt:

Jeder Strichcodeleser 6, 7 ist ausgebildet, die räumliche Position eines abgetasteten Objekts zu bestimmen. Dazu wird beispielsweise vorab für jeden Strichcodeleser 6, 7 dessen räumliche Position innerhalb eines vorgegebenen, kartesischen Koordinatensystems sowie seine Ausrichtung bezüglich der drei Koordinatenachsen bestimmt. Weiterhin sind die Strichcodeleser 6, 7 dazu ausgebildet, den Leseabstand zu einem abgetasteten Objekt zu ermitteln, so daß aus den Positions- und Lagedaten des jeweiligen Strichcodelesers 6, 7 sowie dem ermittelten Leseabstand die räumliche Position eines abgetasteten Objekts innerhalb des vorgegebenen Koordinatensystems bestimmbar ist.

Weiterhin wird zu einem Referenzzeitpunkt to ein Inkremental-Taktsignal gestartet, dessen Frequenz mit der Bewegungsgeschwindigkeit des Förderbandes 1 korrespondiert und das bevorzugt binär codiert wird.

Zum Zeitpunkt t₁ wird der rückwärtige Teil des Strichcodes 2 von dem Abtaststrahl 3 überstrichen, wobei der von der Abtastlinie 13 überstrichene Bereich des Strichcodes 2 als Codesegment 15 erfaßt wird. Gleichzeitig mit der Erfassung wird durch den Strichcodeleser 6 die räumliche Position des erfaßten Codesegments 15 sowie der aktuelle Zählerstand i₁ des Inkremental-Taktsignals zum Zeitpunkt t₁ ermittelt.

Sowohl das erfaßte Codesegment 15 als auch die räumliche Position des Strichcodes 2 sowie der Zählerstand i₁ des Inkremental-Taktsignals werden von dem Strichcodeleser 6 über die Leitung 8 an die zentrale Auswerteeinheit 10 übermittelt. Dabei können die abgetasteten Codeelemente 5 des Codesegments 15 bereits durch den Strichcodeleser 6 decodiert sein, so daß die decodierten Zeichen an die zentrale Auswerteeinheit 10 übertragen werden. Es ist jedoch auch möglich, den Inhalt des Codesegments 15 undecodiert an die Auswerteeinheit 10 zu übertragen. Beispielsweise können die Lauflängen der abgetasteten Codeelemente 5 oder unmittelbar die Codeelemente als graphische Pixelinformation (Bitmap) übertragen werden.

Zum Zeitpunkt t₂ wird der in Fig. 1 vorne gelegene Bereich des Strichcodes 2' von dem Abtaststrahl 12 des Strichcodelesers 7 überstrichen, wobei die von der Abtastlinie 14 überdeckten Codeelemente 5 des Strichcodes 2' als Codesegment 16 erfaßt werden. Gleichzeitig mit der Erfassung des Codesegments 16 werden durch den Strichcodeleser 7 die räumliche Position (x₂, y₂, z₂) des Codesegments 16 sowie der Zählerstand i₂ des Inkremental-Taktsignals zum Zeitpunkt t₂ ermittelt. Der Inhalt des Codesegments 16 sowie dessen Position und der ermittelte Zählerstand i₂ werden über die Leitung 9 der zentralen Auswerteeinheit 10 übermittelt.

In der zentralen Auswerteeinheit 10 werden zunächst die x-Koordinaten x₁, x₂ der Codesegmente 15, 16 von den durch die Bewegung des Förderbands 1 verursachten Weganteilen durch Bildung der Differenzen x₁ - i₁ und x₂ - i₂ bereinigt. Weichen die x-Komponenten der Positionen der Codesegmente 15, 16 nur aufgrund der Bewegung des Förderbandes 1 voneinander ab, so wird diese Abweichung durch diese Differenzbildungen kompensiert, so daß die sich ergebenden, kompensierten x-Koordinaten im wesentlichen gleich groß sind.

Nach dieser Kompensation werden die bereinigten Positionen der Codesegmente 15, 16 miteinander verglichen, indem jeweils die einander entsprechenden Koordinaten der Positionen beispielsweise einen Komperator zugeführt werden. Stimmen die miteinander verglichenen Koordinaten innerhalb vorgegebener Grenzwerte überein, so werden die Codesegmente 15, 16 als Teile desselben Strichcodes 2, 2' eingestuft und von der zentralen Auswerteeinheit 10 zu einem Gesamtstrichcode zusammengefaßt.

Um eine möglichst sichere Rekonstruktion des ursprünglichen Strichcodes 2 zu ermöglichen, können erfindungsgemäß noch die im folgenden beschriebenen, weiteren Entscheidungskriterien überprüft werden. Dabei kann die Bestimmung der beschriebenen Werte jeweils entweder durch den Strichcodeleser 6, 7 oder durch die zentrale Auswerteeinheit 10 durchgeführt werden. Wird die Bestimmung der beschriebenen Werte durch die Strichcodeleser 6, 7 durchgeführt, so werden die ermittelten Werte an die zentrale Auswerteeinheit 10 übermittelt, wo die weitere Auswertung dieser Werte erfolgt.

Zur Erhöhung der Decodiersicherheit wird beispielsweise die Codeart (2/5 Interleaved, Code 128 usw.) der erfaßten Codesegmente 15, 16 bestimmt. Nur wenn die Codeart der erfaßten Codesegmente 15, 16 übereinstimmen, können diese Teile desselben ursprünglichen Strichcodes 2 sein, so daß eine solche Übereinstimmung als notwendiges Kriterium zur Rekonstruktion des Strichcodes überprüft wird.

Weiterhin werden die erfaßten Codesegmente 15, 16 auf identische Bereiche, insbesondere Anfangs- und Endbereiche überprüft und bei Erkennen identischer Bereiche so überlappend zusammengefaßt, daß die erkannten identischen Bereiche aufeinander zu liegen kommen. Von dem sich zu ergebenden Strichcode wird die Lauflänge bzw. die Anzahl der Codeelemente bestimmt, die mit der erwarteten Lauflänge bzw. der erwarteten Codeelementanzahl verglichen wird. Unterscheiden sich die Lauflänge bzw. die Strichcodeanzahl des rekonstruierten Strichcodes von den entsprechenden, erwarteten Werten, so wird der rekonstruierten Strichcode als ungültig eingestuft.

In einem weiteren Verfahrensschritt wird jeweils der Segmenttyp der erfaßten Codesegmente 15, 16 bestimmt, wobei in vorliegendem Fall das Codesegment 15 als Start- und das Codesegment 16 als Stopsegment eingestuft wird. Falls es sich bei dem in dem Startsegment enthaltenen Startzeichen und dem in dem Stopsegment enthaltenen Stopzeichen um korrespondierende Endekennzeichen handelt, ist eine weitere Bedingung für die Zusammenfassung der Codesegmente 15 und 16 zu einem einheitlichen Strichcode erfüllt.

Im folgenden wird das erfindungsgemäße Verfahren anhand eines Strichcodes 2 mit dem Strichcodeinhalt "1234567890" der Codeart 2/5 Interleaved erläutert:

Bei den Abtastungen durch die Strichcodeleser 6, 7 zu den Zeitpunkten t₁ und t₂ wurden folgende Werte für die Codesegmente 15 und 16 ermittelt:

| | Codesegment 15 | Codesegment 16 |
|---|---|---|
| Codeart | 2/5 Interleaved | 2/5 Interleaved |
| Inhalt | 12345678 | 567890 |
| Mehrfachlesung einzelner Zeichen | 55554431 | 112234 |
| Segmenttyp | Startsegment mit Startzeichen | Stopsegment mit Stopzeichen |
| x-Koordinate | 400 mm | 500 mm |
| y-Koordinate | 22 mm | 20 mm |
| z-Koordinate | 48 mm | 50 mm |
| Zählerstand des Inkrementalsignals | 200 mm | 300 mm |

Die Überprüfung der beschriebenen Entscheidungskriterien ergibt dann folgendes Ergebnis:
1. Die Codeart der Codesegmente 15 und 16 ist identisch.
2. Der Inhalt der Codesegmente umfaßt die identischen Teilbereiche "5, 6, 7, 8". Bei entsprechender überlappender Zusammensetzung ergibt sich eine gesuchte Codelänge "10", die mit der gesuchten Codelänge übereinstimmt.
3. Nach Zusammensetzen der Codesegmente ergibt sich ein Gesamt-Mehrfachlesungsprofil von "5555555334". Somit ist eine geforderte Mehrfachlesung pro Zeichen von mindestens 3 erfüllt.
4. Die Codesegmente enthalten zueinander passende Start- und Stopzeichen.
5. Die von dem Verschiebeweg bereinigte x-Koordinate des Codesegments 15 beträgt 400 mm - 200 mm = 200 mm. Die von der Verschiebeweg bereinigte x-Koordinate des Codesegments 16 beträgt 500 mm - 300 mm = 200 mm. Somit stimmen die kompensierten x-Koordinaten der Codesegmente 15 und 16 überein.
6. Die x-Koordinaten 15 und 16 unterscheiden sich lediglich um 2 mm, so daß die Unterschiede im Toleranzbereich von beispielsweise 5 mm liegen.
7. Die z-Koordinaten der Codesegmente 15 und 16 unterscheiden sich ebenfalls um 2 mm. Auch hier liegt der Unterschied innerhalb des Toleranzbereichs.

Alle vorgegebenen Entscheidungskriterien werden somit positiv bewertet, so daß sich der rekonstruierte Strichcode zu "1234567890" ergibt und eine Rekonstruktion somit erfolgreich ist.

### Bezugszeichenliste

- 1: Förderband
- 2, 2': Strichcode
- 3, 3': Objekt
- 4: Pfeil
- 5: Codeelemente
- 6: Strichcodeleser
- 7: Strichcodeleser
- 8: Leitung
- 9: Leitung
- 10: Auswerteeinheit
- 11: Abtaststrahl
- 12: Abtaststrahl
- 13: Abtastlinie
- 14: Abtastlinie
- 15: Codesegment
- 16: Codesegment

## Patentansprüche

1. Verfahren zum Lesen eines aus einer vorgegebenen Anzahl von Codeelementen (5) bestehenden Strichcodes (2, 2') zur Erzeugung eines binären Signals mit aufeinanderfolgenden High-Low-Phasen, deren Längen den Breiten der aufeinanderfolgenden Codeelemente (5) entsprechen, wobei der Strichcode (2, 2') durch zumindest zwei Abtaststrahlen (11, 12) aus unterschiedlichen Richtungen entlang unterschiedlicher Abtastlinien (13, 14) abgetastet wird, zumindest ein Teil der durch einen Abtaststrahl (11, 12) abgetasteten Bereiche des Strichcodes (2, 2') jeweils als Codesegment (15, 16) erfaßt wird, und zumindest ein Teil der erfaßten Codesegmente (15, 16) aufgrund vorgegebener Entscheidungskriterien ausgewählt und zur Rekonstruktion des abgetasteten Strichcodes (2, 2') zusammengefaßt wird, wobei die erfassten Codesegmente (15, 16) einer Auswerteeinheit (10) zugeführt werden,
**dadurch gekennzeichnet,**
**dass** durch die Auswerteeinheit (10) die vorgegebenen Entscheidungskriterien überprüft und die aufgrund der Überprüfung ausgewählten Codesegmente (15, 16) zusammengefasst werden,
**dass** für eine korrekte Zuordnung der von den unterschiedlichen Abtaststrahlen (11, 12) erfassten Codesegmente (15, 16) zu dem jedem Codesegment (15, 16) jeweils zugehörigen Strichcode (2, 2') für jedes der erfassten Codesegmente (15, 16) seine räumliche Position ((x₁, y₁, z₁), (x₂, y₂, z₂)) jeweils zum Zeitpunkt (t₁, t₂) seiner Abtastung bestimmt wird und dass die Codesegmente (15, 16) in Abhängigkeit von den ermittelten Positionen ((x₁, y₁, z₁), (x₂, y₂, z₂)) als Teile ein und desselben abgetasteten Strichcodes ausgewählt, diesem zugeordnet und zusammengefasst werden.

2. Verfahren nach Anspruch 1,
**dadurch gekennzeichnet,**
**daß** die Abtaststrahlen (11, 12) von unterschiedlichen, insbesondere räumlich voneinander getrennten Strichcodelesern (6, 7) ausgesandt werden und/oder daß die Abtaststrahlen von einem Strichcodeleser, insbesondere durch Teilen und/oder Umlenken eines Abtaststrahls, erzeugt und ausgesandt werden.

3. Verfahren nach einem der vorhergehenden Ansprüche,
**dadurch gekennzeichnet,**
**daß** die Auswerteeinheit als zentrale Auswerteeinheit (10) ausgebildet ist, insbesondere daß die erfaßten Codesegmente (15, 16) der zentralen Auswerteeinheit (10) in Form der dekodierten Zeichen zugeführt werden, wobei vorteilhaft die erfaßten Codesegmente (15, 16) der zentralen Auswerteeinheit (10) kodiert, insbesondere die Lauflängen der Codeelemente (5) oder in graphischer Form, beispielsweise in Pixeldarstellung, zugeführt werden.

4. Verfahren nach Anspruch 3,
**dadurch gekennzeichnet,**
**daß** als Auswerteeinheit der bzw. einer der Strichcodeleser verwendet wird oder daß die Auswerteeinheit (10) von dem Strichcodeleser bzw. den Strichcodelesern (6, 7) getrennt ausgebildet ist.

5. Verfahren nach einem der vorhergehenden Ansprüche,
**dadurch gekennzeichnet,**
**daß** die erfaßten Codesegmente (15, 16) in allen möglichen Kombinationen zusammengefaßt und jeweils auf Erfüllung der vorgegebenen Entscheidungskriterien hin überprüft werden.

6. Verfahren nach einem der vorhergehenden Ansprüche,
**dadurch gekennzeichnet,**
**dass** jeweils die Codesegmente (15, 16) zusammengefasst werden, deren räumliche Positionen ((x₁, y₁, z₁), (x₂, y₂, z₂)) innerhalb vorgegebener Grenzwerte übereinstimmen.

7. Verfahren nach Anspruch 6,
**dadurch gekennzeichnet,**
**daß** zwischen dem Strichcode (2, 2') und dem Strichcodeleser bzw. den Strichcodelesern (6, 7) eine Relativbewegung stattfindet, insbesondere der Strichcode (2, 2') bevorzugt auf einer Fördereinrichtung (1) bewegt wird, und daß bei der Bestimmung bzw. der Auswertung der räumlichen Positionen ((x₁, y₁, z₁), (x₂, y₂, z₂)) diese Relativbewegung berücksichtigt wird, insbesondere daß für jedes erfaßte Codesegment (15, 16) jeweils zum Zeitpunkt (t₁, t₂) seiner Abtastung ein für den ab einem, insbesondere für alle Codesegmente (15, 16) gleichen Referenzzeitpunkt zurückgelegten Weg des jeweiligen Codesegments (15, 16) repräsentativer Abstandswert (i₁, i₂) ermittelt wird, daß jeweils bei der Bestimmung bzw. der Auswertung der räumlichen Position ((x₁, y₁, z₁), (x₂, y₂, z₂)) der Codesegmente (15, 16) der Abstandswert (i₁, i₂) berücksichtigt, insbesondere jeweils von der zur Bewegungsrichtung parallelen Komponente (x₁, x₂) der ermittelten räumlichen Position ((x₁, y₁, z₁), (x₂, y₂, z₂)) abgezogen wird, und insbesondere daß zum Referenzzeitpunkt ein Inkremental-Taktsignal gestartet und als Abstandswert (i₁, i₂) der Inkremental-Zählerstand zum Zeitpunkt der Abtastung verwendet wird.

8. Verfahren nach Anspruch 7,
**dadurch gekennzeichnet,**
**daß** zur Bestimmung der räumlichen Position drei kartesische Positionskoordinaten ((x₁, y₁, z₁), (x₂, y₂, z₂)) ermittelt werden, wobei eine der Koordinaten (x₁, x₂) als Hauptkoordinate die Position entlang der Relativbewegung angibt.

9. Verfahren nach einem der vorhergehenden Ansprüche,
**dadurch gekennzeichnet,**
**daß** aus den erfaßten Codesegmenten (15, 16) jeweils die Codeart bestimmt wird und diejenigen Codesegmente (15, 16) mit übereinstimmender Codeart zusammengefaßt werden, und/oder daß diejenigen Codesegmente (15, 16) zusammengefaßt werden, deren Zusammenfassung einen Strichcode mit zulässiger Lauflänge bzw. Codeelementanzahl, insbesondere mit der Lauflänge bzw. der Codeelementanzahl des abgetasteten Strichcodes (2, 2') ergibt, und/oder daß jeweils Codesegmente (15, 16) zusammengefaßt werden, bei denen die erfaßten Codeelemente (5) zumindest im Endbereich des einen Codesegments (15) mit den erfaßten Codeelementen (5) zumindest im Anfangsbereich des anderen Codesegments (16) übereinstimmen, wobei die Codesegmente (15, 16) so überlappend zusammengefaßt werden, daß die übereinstimmenden Codeelemente (5) aufeinanderliegen.

10. Verfahren nach einem der vorhergehenden Ansprüche,
**dadurch gekennzeichnet,**
**daß** jedes Codesegment (15, 16) durch eine Mehrfachlesung ermittelt wird und daß diejenigen Codesegmente (15, 16) zusammengefaßt werden, deren Zusammenfassung einen Strichcode ergibt, bei dem der Wert der Mehrfachlesung für alle Codeelemente (5) einen vorgegebenen Mindestwert überschreitet, und/oder daß für jedes Codesegment (15, 16) sein Segmenttyp bestimmt wird, insbesondere ob es sich um ein Start-, ein Mitten- oder ein Stoppsegment handelt, und daß jeweils die erfaßten Codesegmente (15, 16), deren Segmenttypen zueinander korrespondieren, zusammengefaßt werden, wobei die Codesegmente (15, 16) insbesondere so zur Rekonstruktion des abgetasteten Strichcodes (2, 2') zusammengefaßt werden, daß das Startsegment am Anfang, das Mittensegment bzw. die Mittensegmente in der Mitte und das Stoppsegment am Ende des rekonstruierten Strichcodes angeordnet sind.

11. Verfahren nach einem der vorhergehenden Ansprüche,
**dadurch gekennzeichnet,**
**daß** diejenigen Codesegmente (15, 16) zusammengefaßt werden, deren Zusammenfassung einen Strichcode mit positiver Prüfzifferbewertung ergibt, und/oder daß der rekonstruierte Strichcode dekodiert wird.

12. Vorrichtung zum Lesen eines aus einer vorgegebenen Anzahl von Codeelementen (5) bestehenden Strichcodes (2, 2') zur Erzeugung eines binären Signals mit aufeinanderfolgenden High-Low-Phasen, deren Längen den Breiten der aufeinanderfolgenden Codeelemente (5) entsprechen, ausgebildet zur Durchführung des Verfahrens nach einem der vorhergehenden Ansprüche,
mit zumindest zwei Strichcodelesern (6, 7), die zur Abtastung des Strichcodes (2, 2') entlang unterschiedlicher Abtastlinien (13, 14) einen oder mehrere Abtaststrahlen (11, 12) in unterschiedliche Richtungen aussenden,
mit einer Codesegmenterfassungseinheit zur Erfassung zumindest eines Teils der durch einen Abtaststrahl (11, 12) abgetasteten Bereiche des Strichcodes (2, 2') jeweils als Codesegment (15, 16), und
mit einer zentralen Auswerteeinheit (10) zur Überprüfung vorgegebener Entscheidungskriterien für zumindest einen Teil der erfaßten Codesegmente (15, 16),
**dadurch gekennzeichnet,**
**dass** die Auswerteeinheit (10), abhängig vom Ergebnis der Überprüfung, zur Auswahl und Zusammenfassung eines Teils der überprüften Codesegmente (15, 16) zur Rekonstruktion des abgetasteten Strichcodes ausgebildet ist,
**dass** die Strichcodeleser (6, 7) zur Bestimmung der räumlichen Position ((x₁, y₁, z₁), (x₂, y₂, z₂)) der erfassten Codesegmente (15, 16) jeweils zum Zeitpunkt (t₁, t₂) der Abtastung ausgebildet sind und dass die Auswerteeinheit (10) ausgebildet ist, in Abhängigkeit von den ermittelten Positionen ((x₁, y₁, z₁), (x₂, y₂, z₂)) Codesegmente (15, 16) als Teile desselben abgetasteten Strichcodes zu erkennen und zusammenzufassen.

## Claims

1. Method of reading a bar code (2, 2') consisting of a predetermined number of code elements (5) for the generation of a binary signal with sequential high/low phases, the lengths of which correspond to the widths of the sequential code elements (5), wherein the bar code (2, 2') is sensed by at least two scanning beams (11, 12) from different directions along different scanning lines (13, 14), at least some of the regions of the bar code (2, 2') scanned by a scanning beam (11, 12) are respectively detected as a code segment (15, 16), and at least some of the detected code segments (15, 16) are selected with respect to predetermined decision criteria and are combined for the reconstruction of the scanned bar code (2, 2'), with the detected code segments (15, 16) being supplied to an evaluation unit (10), **characterized in that**
the pre-determined decision criteria are checked and the code segments (15, 16) selected as a result of the check are combined by the evaluation unit (10);
**in that**, for a correct association of the code segments (15, 16) detected by the different scanning beams (11, 12) with the bar code (2, 2') respectively associated with each code segment (15, 16) for each of the detected code segments (15, 16), its spatial position ((x₁, y₁, z₁), (x₂, y₂, z₂)) is respectively determined at the time (t₁, t₂) of its scanning; and **in that** the code segments (15, 16) are selected in dependence on the determined positions ((x₁, y₁, z₁), (x₂, y₂, z₂)) as parts of one and the same scanned bar code, are associated with it and are combined.

2. Method in accordance with claim 1, **characterized in that** the scanning beams (11, 12) are transmitted from different bar code readers (6, 7), which are in particular spatially separated from one another; and/or **in that** the scanning beams are produced and transmitted by a bar code reader, in particular by division and/or deflection of the scanning beam.

3. Method in accordance with any one of the preceding claims, **characterized in that** the detected code segments (15, 16) are supplied to the central evaluation unit (10) in the form of the decoded signals; with the detected code segments (15, 16) advantageously being supplied to the central evaluation unit (10) in coded form, in particular in the form of the running lengths of the code elements (5) or in graphic form, for example in pixel representation.

4. Method in accordance with claim 3, **characterized in that** the bar code reader or one of the bar code readers is used as an evaluation unit; or **in that** the evaluation unit (10) is formed separately from the bar code reader or the bar code readers (6, 7).

5. Method in accordance with any one of the preceding claims, **characterized in that** the detected code segments (15, 16) are combined in all possible combinations and are each investigated to see whether they satisfy the predetermined decision criteria.

6. Method in accordance with any one of the preceding claims, **characterized in that** the code segments (15, 16) are respectively combined, for which the spatial positions ((x₁, y₁, z₁), (x₂, y₂, z₂)) correspond within predetermined boundary values.

7. Method in accordance with claim 6, **characterized in that** a relative movement takes place between the bar code (2, 2') and the bar code reader or the bar code readers (6, 7), in particular the bar code (2, 2') is preferably moved on a conveyor device (1), and **in that** this relative movement is taken into account when determining or evaluating the spatial positions ((x₁, y₁, z₁), (x₂, y₂, z₂)); in particular **in that** for each detected code segment (15, 16) a representative distance value (i_{1'}, i₂₎ is determined for the path of the respective code segment (15, 16) traveled from a reference time point, in particular a reference time point which is the same for all code segments (15, 16), in each case at the time (t₁, t₂), at which the respectively detected code segment (15, 16) is scanned; and **in that** the distance value (i₁, i₂) is in each case taken into account in the determination or the evaluation of the spatial position ((x₁, y₁, z₁), (x₂, y₂, z₂)) of the code segments (15, 16) and is, in particular, in each case subtracted from the component (x₁, x₂) of the determined spatial position ((x₁, y₁, z₁), (x₂, y₂, z₂)) parallel to the direction of movement; and in particular **in that** an incremental clock signal is started at the reference time point, and the incremental count is used at the time point of the scan as the distance value (i₁, i₂).

8. Method in accordance with claim 7, **characterized in that** three cartesian position coordinates ((x₁, y₁, z₁), (x₂, y₂, z₂)) are found for the determination of the spatial position, with one of the coordinates (x₁, x₂) being a main coordinate reciting the position along the relative movement.

9. Method in accordance with any one of the preceding claims, **characterized in that** the type of code is in each case determined from the detected code segments (15, 16) and those code segments (15, 16) with a corresponding code type are combined; and/or **in that** those code segments (15, 16) are combined for which the combination results in a bar code with a permissible running length or number of code elements, in particular with the running length or the code element number of the scanned bar code (2, 2'); and/or **in that** respective code segments (15, 16) are combined for which the detected code elements (5), at least in the end region of the one code segment (15), correspond to the detected code elements (5), at least in the starting region of the other code segment (15), with the code elements (15, 16) being so overlappingly combined that the corresponding code elements (5) lie on one another.

10. Method in accordance with any one of the preceding claims, **characterized in that** each code segment (15, 16) is found by a multiple reading and **in that** those code segments (15, 16) are combined which, when combined, result in a bar code in which the value of the multiple reading exceeds a predetermined minimum value for all code elements (5); and/or **in that** a segment type is determined for each code segment (15, 16), in particular whether it is a start segment, a middle segment or a stop segment, and **in that** the detected code segments (15, 16) of which the segments type correspond to one another, are respectively combined, wherein the code segments (15, 16) are combined for the reconstruction of the scanned bar code (2, 2') in particular such that the start segment is arranged at the start, the middle segment or the middle segments is/are arranged at the middle and the stop segment is arranged at the end of the reconstructed bar code.

11. Method in accordance with any one of the preceding claims, **characterized in that** those code segments (15, 16) are combined which, when combined, result in a bar code with a positive test number evaluation; and/or **in that** the reconstructed bar code is decoded.

12. Apparatus for the reading of a bar code (2, 2') consisting of a predetermined number of code elements (5) for the generation of a binary signal with sequential high-low phases, the lengths of which correspond to the widths of sequential code elements (5), made for carrying out the method in accordance with any one of the preceding claims,
having at least two bar code readers (6, 7) which transmit one or more scanning beams (11, 12) in different directions for the scanning of the bar code (2, 2') along different scanning lines (13, 14), having a code segment detection unit for detecting at least a part of the regions of the bar code (2, 2') scanned by a scanning beam (11, 12) as a respective code segment (15, 16) and
having a central evaluation unit (10) for checking predetermined decision criteria for at least some of the detected code segments (15, 16),
**characterized in that**
the evaluation unit (10) is made, in dependence on the result of the check, for the selection and combination of some of the checked code segments (15, 16) for the reconstruction of the scanned bar code;
**in that** the bar code readers (6, 7) are made for the determination of the spatial position ((x₁, y₁, z₁), (x₂, y₂, z₂)) of the scanned code segments (15, 16) in each case at the time (t₁, t₂) of the scan; and **in that** the evaluation unit (10) is made to recognize and combine code segments (15, 16) as parts of the same scanned bar code in dependence on the determined positions ((x₁, y₁, z₁), (x₂, y₂, z₂)).

## Revendications

1. Procédé de lecture d'un code à barres (2, 2') composé d'un nombre prédéterminé d'éléments de code (5), servant à produire un signal binaire comportant des phases hautes et des phases basses successives dont les longueurs correspondent aux largeurs des éléments de code successifs (5), le code à barres (2, 2') étant balayé depuis des directions différentes, selon des lignes de balayage différentes (13, 14), par au moins deux faisceaux de balayage (11, 12), au moins une partie des zones du code à barres (2, 2') balayées par un faisceau de balayage (11, 12) étant chaque fois saisie sous forme de segments de code (15, 16), et au moins une partie des segments de code saisis (15, 16) étant sélectionnée sur la base de critères de décision fixés à l'avance et étant réunie pour reconstituer le code à barres balayé (2, 2'), les segments de code saisis (15, 16) étant amenés à une unité d'exploitation (10),
**caractérisé en ce que** l'unité d'exploitation (10) examine les critères de décision et réunit les segments de code (15, 16) sélectionnés sur la base de l'examen, **en ce que**, pour associer correctement les segments de code saisis (15, 16) par les différents faisceaux de balayage (11, 12) au code à barres (2, 2') associé à chaque segment de code (15, 16), la position spatiale ((x₁, y₁, z₁), (x₂, y₂, z₂)) de chacun des segments de code saisis (15, 16) est chaque fois déterminée à l'instant (t₁, t₂) de son balayage, et ce que les segments de code (15, 16) sont sélectionnés en tant que parties d'un seul et même code à barres balayé et en fonction des positions ((x₁, y₁, z₁), (x₂, y₂, z₂)) calculées, puis sont associés à celui-ci et sont réunis.

2. Procédé selon la revendication 1,
**caractérisé en ce que** les faisceaux de balayage (11, 12) sont émis par des lecteurs de code à barres différents (6, 7), qui sont notamment séparés spatialement l'un de l'autre, et/ou **en ce que** les faisceaux de balayage sont produits et émis par un seul lecteur de code à barres, notamment en divisant et/ou en déviant un faisceau de balayage.

3. Procédé selon l'une des revendications précédentes,
**caractérisé en ce que** l'unité d'exploitation est réalisée sous forme d'unité d'exploitation centrale (10), notamment **en ce que** les segments de code saisis (15, 16) sont amenés à l'unité d'exploitation centrale (10) sous forme de signes décodés, les segments de code saisis (15, 16) étant avantageusement amenés à l'unité d'exploitation centrale (10) sous forme codée, notamment les longueurs totales des éléments de code (5), ou sous forme graphique, par exemple sous forme de représentation par éléments d'image (pixels).

4. Procédé selon la revendication 3,
**caractérisé en ce qu'**on utilise le lecteur ou l'un des lecteurs de code à barres comme unité d'exploitation, ou **en ce que** l'unité d'exploitation (10) est réalisée de manière séparée du ou des lecteurs de code à barres (6, 7).

5. Procédé selon l'une des revendications précédentes,
**caractérisé en ce que** les segments de code saisis (15, 16) sont réunis dans toutes les combinaisons possibles et l'on vérifie chaque fois s'ils remplissent les critères de décision fixés à l'avance.

6. Procédé selon l'une des revendications précédentes,
**caractérisé en ce qu'**on réunit chaque fois les segments de code (15, 16) dont les positions spatiales ((x₁, y₁, z₁), (x₂, y₂, z₂) se situent à l'intérieur de limites fixées à l'avance.

7. Procédé selon la revendication 6,
**caractérisé en ce qu'**un déplacement relatif a lieu entre le code à barres (2, 2') et le ou les lecteurs de code à barres (6, 7), le code à barres (2, 2') se déplaçant notamment et de préférence sur un dispositif de transport (1), et **en ce que** ce déplacement relatif est pris en considération lors de la détermination ou de l'évaluation des positions spatiales ((x₁, y₁, z₁), (x₂, y₂, z₂)), notamment **en ce qu'**une valeur de distance (i₁, i₂) représentative d'un chemin parcouru par le segment de code concerné (15, 16) à partir d'un instant de référence, notamment identique pour tous les segments de code (15, 16), est calculée pour chaque segment de code saisi (15, 16) à l'instant (t₁, t₂) de son balayage, la valeur de distance (i₁, i₂) est prise en considération lors de chaque détermination ou évaluation de la position spatiale ((x₁, y₁, z₁), (x₂, y₂, z₂)) des segments de code (15, 16), elle est notamment chaque fois retranchée de la composante (x₁, x₂) de la position spatiale obtenue ((x₁, y₁, z₁), (x₂, y₂, z₂)) parallèle à la direction de déplacement, et notamment **en ce qu'**un signal incrémentiel de synchronisation est lancé à l'instant de référence et la position incrémentielle de compteur à l'instant du balayage est utilisée comme valeur de distance (i₁, i₂).

8. Procédé selon la revendication 7,
**caractérisé en ce que**, pour déterminer la position spatiale, on obtient trois coordonnées de position cartésiennes ((x₁, y₁, z₁), (x₂, y₂, z₂)), l'une des coordonnées (x₁, x₂) indiquant, en tant que coordonnée principale, la position dans la direction du déplacement relatif.

9. Procédé selon l'une des revendications précédentes,
**caractérisé en ce qu'**on détermine chaque fois le type de code à partir des segments de code saisis (15, 16) et on réunit les segments de code (15, 16) qui ont un type de code concordant, et/ou **en ce qu'**on réunit les segments de code (15, 16) dont la réunion donne un code à barres ayant une longueur totale ou un nombre d'éléments de code admissible, notamment la longueur totale ou le nombre d'éléments de code du code à barres balayé (2, 2'), et/ou on réunit chaque fois des segments de code (15, 16) dans lesquels les éléments de code saisis (5) concordent au moins dans la zone de fin de l'un des segments de code (15) et dans lesquels les éléments de code saisis (5) correspondent au moins dans la zone de début de l'autre segment de code (16), les segments de code (15, 16) étant réunis en se chevauchant de telle manière que les éléments de code (5) concordants soient superposés.

10. Procédé selon l'une des revendications précédentes,
**caractérisé en ce que** chaque segment de code (15, 16) est détecté par lecture multiple et **en ce que** les segments de code (15, 16) dont la réunion donne un code à barres dans lequel la valeur de lecture multiple dépasse pour tous les éléments de code (5) une valeur minimale prédéterminée sont réunis, et/ou **en ce qu'**on détermine le type de segment de chaque segment de code (15, 16), et notamment s'il s'agit d'un segment initial, d'un segment médian ou d'un segment d'arrêt, et **en ce que** tous les segments de code saisis (15, 16) dont les types de segment correspondent entre eux sont réunis, les segments de code (15, 16) étant notamment réunis pour reconstituer le code à barres balayé (2, 2') de telle manière que le segment initial se trouve au début du code à barres reconstitué, le ou les segments médians se trouvent au milieu et le segment d'arrêt se trouve à la fin.

11. Procédé selon l'une des revendications précédentes,
**caractérisé en ce qu'**on réunit les segments de code (15, 16) dont la réunion donne un code à barres avec évaluation de chiffre de contrôle positive, et/ou le code à barres reconstitué est décodé.

12. Dispositif de lecture d'un code à barres (2, 2') composé d'un nombre prédéterminé d'éléments de code (5), servant à produire un signal binaire comportant des phases hautes et des phases basses successives dont les longueurs correspondent aux largeurs des éléments de code successifs (5), lequel dispositif de lecture est réalisé pour mettre en oeuvre le procédé selon l'une des revendications précédentes :
comportant au moins deux lecteurs de code à barres (6, 7) qui envoient dans des directions différentes un ou plusieurs faisceaux de balayage (11, 12) servant à balayer le code à barres (2, 2') selon des lignes de balayage différentes (13, 14),
comportant une unité de détection de segments de code servant à détecter, chaque fois sous forme de segments de code (15, 16), au moins une partie des zones du code à barres (2, 2') balayées à l'aide d'un faisceau de balayage (11, 12), et
comportant une unité d'exploitation centrale (10) servant à vérifier, pour au moins une partie des segments de code saisis (15, 16), des critères de décision fixés à l'avance,
**caractérisé en ce que**
l'unité d'exploitation (10) est réalisée pour sélectionner et réunir, en fonction du résultat de l'examen, une partie des segments de code examinés (15, 16), et ce, en vue de reconstituer le code à barres balayé,
les lecteurs de code à barres (6, 7) sont réalisés pour déterminer la position spatiale ((x₁, y₁, z₁), (x₂, y₂, z₂)) des segments de code saisis (15, 16) chaque fois à l'instant (t₁, t₂) du balayage et **en ce que** l'unité d'exploitation (10) est réalisée pour reconnaître et réunir, en fonction des positions calculées ((x₁, y₁, z₁), (x₂, y₂, z₂)), des segments de code (15, 16) en tant que parties du code à barres balayé.
